# EUROPEAN PATENT SPECIFICATION

(11) **EP 2 328 302 B1**
(45) Date of publication and mention of the grant of the patent: **13.08.2014**
(21) Application number: 08876917.9
(22) Date of filing: 30.12.2008
(51) Int. Cl.: H04L 29/08, H04L 12/24, G06F 17/30

(54) **A METHOD AND DEVICE FOR MAINTAINING A CHANGELOG IN DATA SYNCHRONIZATION**
VERFAHREN UND EINRICHTUNG ZUM UNTERHALTEN EINES ÄNDERUNGSLOG BEI DER DATENSYNCHRONISATION
PROCÉDÉ ET DISPOSITIF DESTINÉS À METTRE À JOUR UN JOURNAL DES MODIFICATIONS DANS UNE SYNCHRONISATION DE DONNÉES

(30) Priority: 09.09.2008 CN 200810160881
(43) Date of publication of application: 01.06.2011
(73) Proprietor: ZTE Corporation, Shenzhen, Guangdong 518057 (CN)
(72) Inventor: FU, Liqin, Guangdong 518057 (CN); ZHOU, Tao, Guangdong 518057 (CN); PU, Jingchun, Guangdong 518057 (CN); JU, Fei, Guangdong 518057 (CN); XIE, Xin, Guangdong 518057 (CN); YUAN, Lei, Guangdong 518057 (CN)
(74) Representative: Ilgart, Jean-Christophe
(86) International application number: PCT/CN2008/073860
(87) International publication number: WO 2010/028529

(56) References cited:
- EP-A1- 1 564 657
- CN-A- 1 968 281
- CN-A- 1 996 871

## Description

### Field of the Invention

The present invention relates to the mobile communication field, and in particular, to a method and device for maintaining a changelog in the data synchronization.

### Background of the Invention

Currently, the resources such as personal information, schedule information and mail information in the mobile terminal have become an important part in the information management of the mobile terminal. The problem of how to safely and effectively back up the data into the network server so as to make it easy to recover the data backed up when the mobile terminal such as mobile phone is replaced or the data in the mobile terminal is changed has become one subject in the data synchronization research, wherein SyncML (Synchronous Markable Language) protocol can realize the data synchronization of the mobile terminal with the network server.

Suppose that a SyncML account number is registered on a certain network server for the mobile phone card in the mobile phone, for instance, SIM (Subscriber Identity Model) card or USIM (Universal Subscriber Identity Model) card, when the data information in the mobile phone changes, the user can directly use the SyncML application in the mobile phone for the data synchronization to keep the mobile phone terminal data consistent with the server data

A method for maintaining a changelog is known from EP 1 564 657.

At present, the basic data synchronization type includes bidirectional fast synchronization and bidirectional slow synchronization, wherein with the bidirectional slow synchronization, all the data record items (such as contacts and calendar) on the mobile terminal and network server are synchronized; and with the bidirectional fast synchronization, all changes occurring in the mobile terminal and network server since the last synchronization of the mobile terminal with network server are synchronized. The user who has registered the SyncML protocol service can select one of the above types to perform data synchronization for the data between the mobile terminal and network server so as to finally keep the data on the mobile terminal and server consistent.

In the above, as for the bidirectional fast synchronization which aims at exchanging the change information, there exists a problem of designing the changelog. The changelog is used to record the data change information in the mobile terminal or network server (either of the two) since the last synchronization. The change information appears in the form of data record items and includes contents of two parts: object and operation for the object, wherein the operation for the object is classified into three types: adding (ADD), deleting (DELETE) and updating (UPDATE), i.e. the changelog records the specific modification to a certain record.

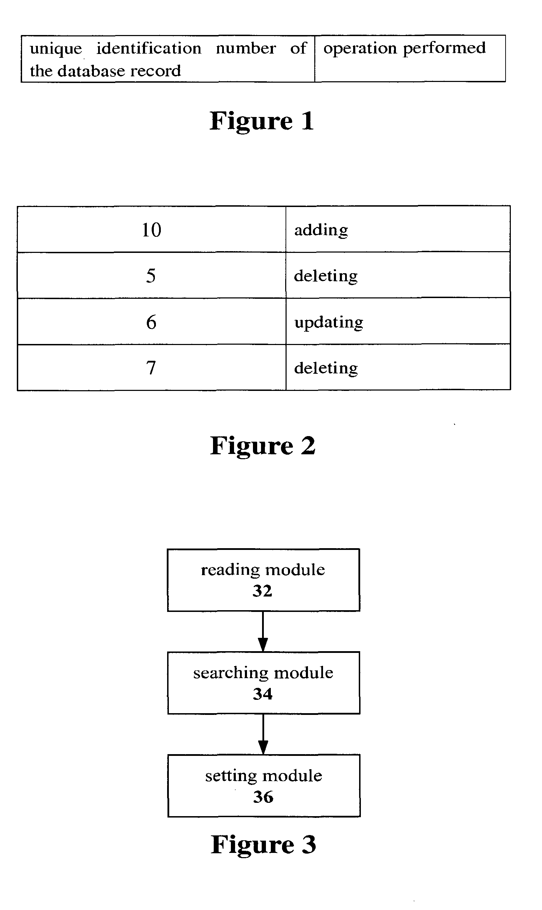

Figure 1 is a data structure scheme of the changelog in a mobile terminal such as mobile phone in the prior art. As shown in Figure 1, this changelog includes two data items: the operated object and the operation for this object. The operated object herein refers to the unique ID (Identifier) number, recorded in the database, of each piece of information stored in the mobile phone.

In the SyncML protocol, the unique ID number of the database record is called as Locally Unique Identifier (LUID for short). This LUID is generated in the mobile phone and is unique; at the mobile phone side, even if data of record item added is identical with a certain deleted record, the LUID of the data of record item added is still different from the LUID of the record formerly deleted.

Figure 2 is a scheme of a specific example of the changelog as shown in Figure 1. As shown in Figure 2, the following operations are performed for the object, respectively: performing an ADD operation for the record of which LUID is 10, a DELETE operation for the record of which LUID is 5, and UPDATE and DELETE operations for the records of which the LUIDs are 6 and 7, respectively.

Based on the provisions of the SyncML protocol, there exist the following problems:
(1) Between two times of synchronization, if a plurality of times of operations are performed for a certain record, each time of the operation then will be recorded into the changelog file. In fact, only the final modification of the record is valid; correspondingly in the changelog file, only the final record is meaningful. Therefore, the redundant data will be produced in the changelog file based on the provisions of the SyncML protocol; and
(2) After a certain piece of changed information stored in the mobile phone has been successfully synchronized to the network side, this record item is still recorded in the changelog file. In fact, the data in this record item is invalid, and thereby causing the redundant data present in the changelog file.

Due to the two reasons, the changelog file continuously increases as it includes a lot of invalid redundant data thus occupy more and more memory spaces.

### Summary of the Invention

The present invention is made by considering the problem that the changelog file continuously increases as it includes a lot of invalid redundant data so as to occupy more and more memory spaces in the related art, thus the object of the present invention is to provide a method and device for maintaining a changelog in data synchronization for solving the above problem.

In order to achieve the above object, a method for maintaining a changelog in data synchronization is provided according to one aspect of the present invention.

In the method for maintaining a changelog in data synchronization according to the present invention, the changelog is configured to record an operation executed for an object and is composed of data record items, wherein the data record item includes flag information configured to uniquely identify an object and an operation type corresponding to the flag information, and the operation type includes adding, updating and deleting. The method includes: between two times of the data synchronization, for a first data record item which is required to be added to the changelog, reading its flag information; searching for whether there is a second data record item including the flag information in the changelog, and in a situation that there is the second data record item, setting the second data record item according to the first data record item.

Preferably, the step of setting the second data record item according to the first data record item specifically includes: in a situation that the operation corresponding to the first data record item is deleting, if the operation type included by the second data record item is adding, deleting the second data record item, and if the operation type included by the second data record item is updating, setting the operation type of the second data record item to be deleting; and in a situation that the operation corresponding to the first data record item is updating, the operation type included by the second data record item remaining unchanged.

Preferably, in a situation that there is no second data record item, the first data record item is added to the changelog, and the operation type is set according to the operation corresponding to the first data record item.

Preferably, the data record item further includes a flag code, wherein the flag code is configured to identify whether the data record item is valid or not.

Preferably, the flag code identifies invalid according to at least either of the following two situations: the operation corresponding to the first data record item causes the second data record item to be invalid; and the synchronization process of the data record items in the changelog is completed.

Preferably, the situation of the operation corresponding to the first data record item causing the second data record item to be invalid specifically includes: the operation corresponding to the first data record item being deleting, and the operation type included by the second data record item being adding.

Preferably, after the second data record item is set according to the first data record item, the above method further includes: storing the data record item identified by the flag code to be valid as new changelog; and replacing the changelog with the new changelog.

Preferably, the changelog is set at the mobile terminal side or network side.

Preferably, in a situation that the changelog is set at the mobile terminal side, the above method further includes: after the mobile terminal and network side complete the data synchronization by means of the changelog, the mobile terminal deleting all data record items in the changelog.

In order to achieve the above object, a device for maintaining a changelog in data synchronization is provided according to the other aspect of the present invention.

In the device for maintaining a changelog in data synchronization according to the present invention, the changelog is configured to record an operation executed for an object and is composed of data record items, wherein the data record item includes flag information used to uniquely identify the object and an operation type corresponding to the flag information, the operation type includes adding, updating and deleting. The device comprises: a reading module, configured to, for a first data record item which is required to be added to the changelog, read flag information of the first data record item between two times of the data synchronization; a searching module, configured to search for whether there is a second data record item including the flag information in the changelog; and a setting module, configured to set the second data record item according to the first data record item in a situation that the searching result by the searching module is that there is the second data record item.

Preferably, the device further comprises a deleting module, configured to delete all data record items for which the data synchronization has been performed in the changelog.

With at least one technical solution described above in the present invention, regarding the problem that there is redundant data in the changelog file as a certain piece of information stored in the mobile phone terminal is modified time after time between two times of synchronization, only the changed information in the last time is stored with the technical means of overlapping the latter data record items in the changelog over the former data record items so as to prevent the changelog file from continuously increasing.

### Brief Description of the Drawings

The drawings here provide a further understanding of the present invention, form a part of the present application, and explain the present invention together with the embodiments in the present invention without unduly limiting the scope of the present invention, wherein
Figure 1 is a changelog data structure scheme in a mobile terminal such as mobile phone in the prior art;
Figure 2 is a scheme of a specific example according to the changelog data structure scheme as shown in Figure 1;
Figure 3 is a structure block diagram of a device for maintaining a changelog in data synchronization according to the embodiments in the present invention;
Figure 4 is a flow chart of a method for maintaining a changelog in data synchronization according to the embodiments in the present invention;
Figure 5 is a schematic diagram of information changes in corresponding changelog when the same data record item is modified between two times of synchronization, according to the embodiments in the present invention;
Figure 6 is a schematic diagram of performing an UPDATE operation for a record of which LUID is 5 between two times of synchronization, according to the embodiments in the present invention;
Figure 7 is a schematic diagram of corresponding data record items after the UPDATE operation for the record of which LUID is 5 after the operation shown in Figure 6 between two times of synchronization, according to the embodiments in the present invention;
Figure 8 is a schematic diagram of corresponding data record items after the DELETE operation for the record of which LUID is 5 after the operation shown in Figure 7 between two times of synchronization, according to the embodiments in the present invention;
Figure 9 is a schematic diagram of the changelog after a certain record is deleted as it is invalid between two times of synchronization, according to the embodiments in the present invention;
Figure 10 is a schematic diagram of an optimized changelog data structure according to the embodiments in the present invention;
Figure 11 is a schematic diagram of information change using the optimized changelog data structure between two times of synchronization, according to the embodiments in the present invention;
Figure 12 is a schematic diagram of record items in the changelog before ADD operation according to the embodiments in the present invention;
Figure 13 is a schematic diagram of record items in the changelog after ADD operation according to the embodiments in the present invention; and
Figure 14 is a schematic diagram of record items in the changelog after DELETE operation according to the embodiments in the present invention.

### Detailed Description of Embodiments

### Functionality Summary

In the technical solutions provided in the embodiments in the present invention, regarding the problem that there is redundant data in the changelog file as a certain piece of information stored in the mobile phone terminal is modified time after time between two times of synchronization, only the change information in the last time is stored with the technical means of overlapping the latter data record items in the changelog over the former data record items so as to prevent the changelog file from continuously increasing.

In the following embodiments, if not particularly indicated, the changelog is configured to record an operation executed for an object and is composed of data record items, the data record item includes flag information configured to uniquely identify an object, i.e. Locally Unique Identifier (LUID for short), and an operation type corresponding to the flag information, wherein the operation type includes adding (ADD), updating (UPDATE) and deleting (DELETE).

The preferred embodiments of the present invention will be described hereinafter in conjunction with the drawings. It should be understood that the preferred embodiments described herein are merely used to describe and illustrate the present invention without limiting the present invention. The embodiments in the present application and the features therein can be combined with each other if they are not conflicted.

### Device Embodiments

A device for maintaining a changelog in data synchronization is provided according to the embodiments in the present invention.

Figure 3 is a structure block diagram of a device for maintaining a changelog in data synchronization according to the embodiments in the present invention. As shown in Figure 3, the device comprises a reading module 32, a searching module 34 and a setting module 36. The above structure will be described in detail hereinafter.

The reading module 32 is configured to read, between two times of the data synchronization, the flag information of a first data record item which is required to be added to the changelog;

The searching module 34 is connected to the reading module 32 and is configured to search for whether there is a second data record item including the flag information read by the reading module 32 in the changelog; and

The setting module 36 is connected to the searching module 34 and is configured to set the second data record item according to the first data record item in a situation that the searching result by the searching module 34 is that there is the second data record item.

With this embodiment, the change information for the last time is stored by performing the overlapping process on the data record items including the same flag information, which can thus prevent the changelog file from continuously increasing.

Preferably, the device further comprises a deleting module (not shown in the figure), configured to delete all data record items for which the data synchronization has been performed in the changelog. With this preferred embodiment, all data record items for which the data synchronization has been performed are deleted, and therefore the memory space occupied can be reduced.

### Method Embodiments

A method for maintaining a changelog in data synchronization is provided according to the embodiments in the present invention. In this method, the changelog can be set at the mobile terminal side or network side.

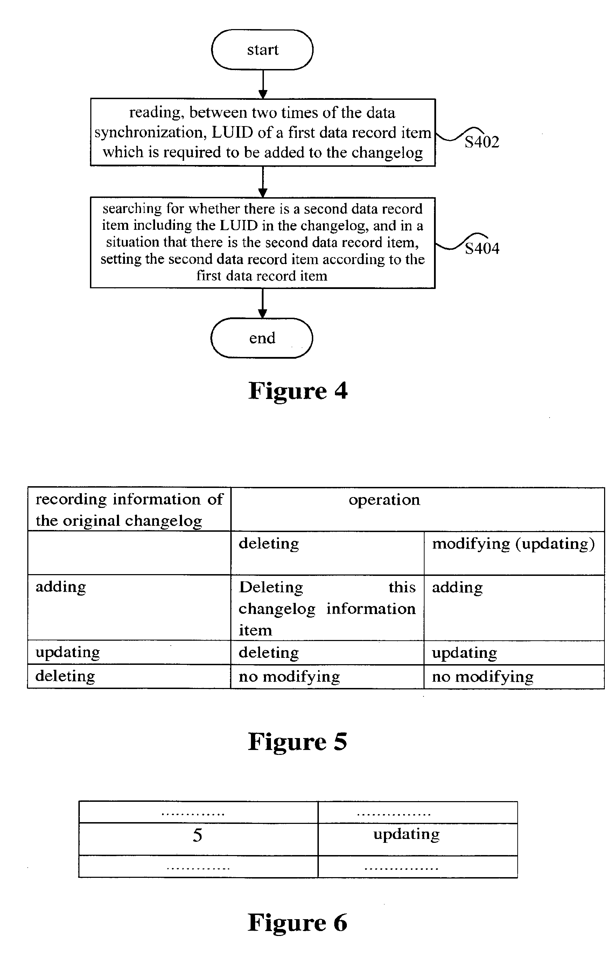

Figure 4 is a flow chart of the method for maintaining a changelog in data synchronization according to the embodiments in the present invention. As shown in Figure 4, the method includes:
step S402, reading, between two times of the data synchronization, LUID of a first data record item which is required to be added to the changelog;
step S404, searching for whether there is a second data record item including the LUID in the changelog, and in a situation that there is the second data record item, setting the second data record item according to the first data record item; and in a situation that there is no second data record item, adding the first data record item to the changelog and setting an operation type according to an operation corresponding to the first data record item.

With this embodiment, only the change information in the last time is stored with the technical means of overlapping the latter data record items in the changelog over the former data record items, which solves the problem that the changelog file will be increased exceedingly if each time of operation is recorded as a plurality of times of operations may be performed for a certain record between two times of synchronization, therefore, the changelog file can be prevented from increasingly increased.

Figure 5 is a schematic diagram of information changes in corresponding changelog when the same data record item is modified between two times of synchronization, according to the embodiments in the present invention. As shown in Figure 5:
in step S404, the step of the operation of setting the second data record item according to the first data record item (i.e. the policy used in modifying the same changelog record) specifically includes the following two situations (41-42):
   (41) in a situation that the operation corresponding to the first data record item is DELETE, if the operation type included by the second data record item is ADD (i.e. the existing record is LUID ADD), the second data record item then is deleted, i.e. counterbalance by deleting after adding, wherein there is no data synchronization between the adding and the deleting; and if the operation type included by the second data record item is UPDATE (i.e. the existing record is LUID UPDATE, indicating that the record is updated in the last time), the operation type of the second data record item then is set to be DELETE (i.e. LUID UPDATE is modified to be LUID DELETE).
      Moreover, it is impossible that the existing record is LUID DELETE since the record that has been deleted cannot be deleted again.
   (42) in a situation that the operation corresponding to the first data record item is UPDATE, the operation type included by the second data record item remains unchanged, i.e. if the existing record is LUID ADD, indicating that adding is performed recently, the changelog file then is unchanged; and if the existing record is LUID UPDATE, indicating that updating is performed recently, the changelog file then is unchanged too; moreover, it is impossible that there is LUID DELETE in the changelog file since the updating cannot be performed after the deleting.
      In step S404, the step of setting the operation type according to the operation corresponding to the first data record item specifically includes the following three situations (43-45):
   (43) if the operation corresponding to the first data record item is ADD, its operation type then is set to be ADD; i.e. when one record is added, the changelog file is added with a record: LUID ADD; this LUID is newly allocated when adding, and theoretically it is impossible that there is already the record of this LUID in the changelog file.
   (44) if the operation corresponding to the first data record item is UPDATE, its operation type then is set to be UPDATE, i.e. the changelog file is added with one record: LUID UPDATE.
   (45) if the operation corresponding to the first data record item is DELETE, its operation type then is set to be DELETE, i.e. the changelog file is added with one record: LUID DELETE.

Next, the situations of updating the changelog, by performing two times of updating operations successively and one time of deleting operation for the record of which LUID is 5 between two times of synchronization processes, are described in conjunction with Figures 6, 7 and 8.

Figure 6 shows the UPDATE operation for the record of which LUID is 5 between two times of synchronization process according to the embodiments in the present invention. As shown in Figure 6, the record of which LUID is 5 is updated for the first time, and as there is no record of which LUID is 5 in the changelog file, the data record item of "5 UPDATE" is added.

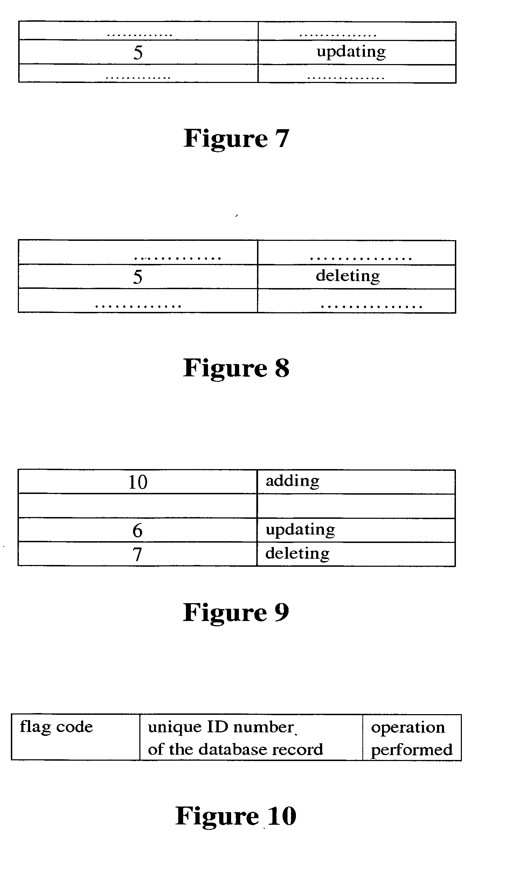

Figure 7 is a schematic diagram of corresponding data record items after performing the UPDATE operation for the record of which LUID is 5 after the operation as shown in Figure 6, between two times of synchronization, according to the embodiments in the present invention. As shown in Figure 7, after the record of which LUID is 5 in the data in the mobile terminal is updated for the second time, it is found that there is the record of which LUID is 5 in the changelog file and the operation type is UPDATE, the changelog file then remains unchanged.

Figure 8 is a schematic diagram of corresponding data record items after the DELETE operation for the record of which LUID is 5 after the operation as shown in Figure 7, between two times of synchronization, according to the embodiments in the present invention. As shown in Figure 8, after a deleting operation is performed for the record of which LUID is 5, it is found likewise that there is the record corresponding to the LUID in the changelog file and the operation type is UPDATE, the changelog should change the operation type of the record item corresponding to the LUID into DELETE.

In the precondition of not adding new changelog data record items, this embodiment only stores the information modified in the last time by the overlapping method, so as to reduce the size of the changelog file and save the memory space for the file.

Further, with this embodiment, the size of the changelog file is restricted with a maximum file length of 2*MAXNUM*"size of one record item", wherein MAXNUM is the number of records supported by the terminal, i.e. the maximum file length is the size of the record items multiplied by the double number of records supported by the terminal, which merely appears in a situation that MAXNUM data are added after MAXNUM data are all deleted.

Figure 9 is a schematic diagram of the changelog after a certain record is deleted as it is invalid, between two times of synchronization, according to the embodiments in the present invention. As shown in Figure 9, the blank line is the memory space released by this record. Before this, adding is firstly performed and then the operation of deleting is performed for the record item of which LUID is 5, thus so as to make the record deleted as it is invalid. In this embodiment, the record item of which LUID is 5 becomes invalid due to the subsequent operation, therefore, the memory space is released.

In order to enable further optimization of the management and maintenance of the file while preventing the changelog file from continuously increasing and making it easy for the search, the present invention provides a preferred embodiment by adding an flage code FLAG used for identifying whether the data record item is valid or not to the data record items in the changelog, i.e. the above data record item further includes a flag code (FLAG) used for identifying whether the data record item is valid or not.

Figure 10 is a schematic diagram of an optimized changelog data structure according to the embodiments in the present invention. As shown in Figure 10, the changelog data structure includes three parts: flag code FLAG, LUID (i.e. unique ID number of the database record), and operation type performed for the record item with the LUID, wherein the flag code has two statuses, namely, valid or invalid. Preferably, "valid" is represented by "1", and "invalid" is represented by "0".

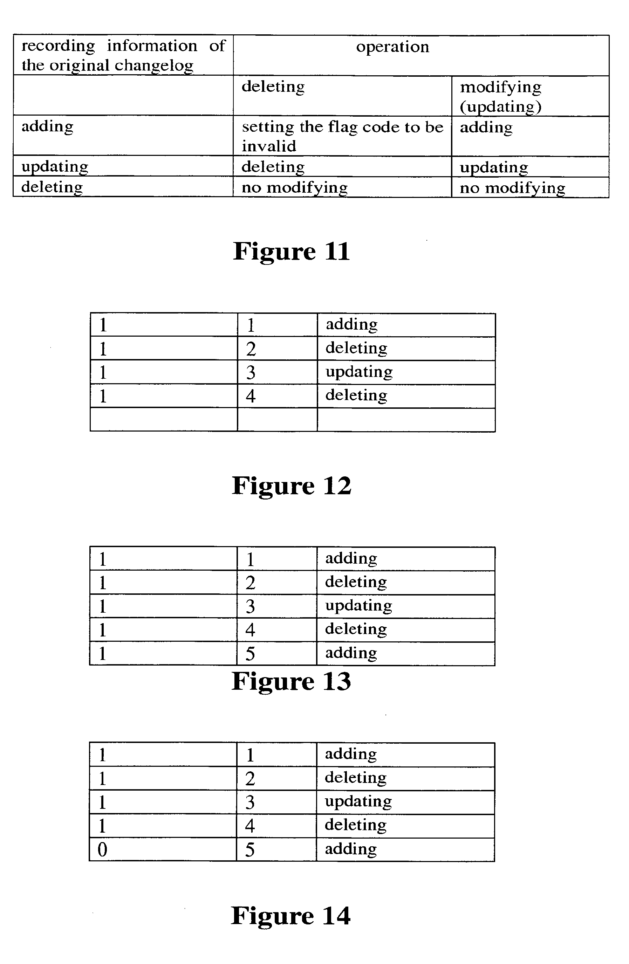

Figure 11 is a schematic diagram of information change using the optimized changelog data structure, between two times of synchronization, according to the embodiments in the present invention. As for the process of realizing the information change in the changelog in Figure 5, unnecessary details will not be given herein.

As shown in Figure 11, regarding the evaluation of the FLAG identifier, the following policy can be used: when a record item with any operation type is newly added to the changelog file, its FLAG identifier becomes valid; and as for the case that the flag code FLAG is invalid, at least two situations are included:
(1) the operation corresponding to the first data record item causes the second data record item to be invalid, i.e. the subsequent operation causes the data record item in the current changelog to be invalid, for instance, the operation corresponding to the first data record item is deleting, and the operation type included by the second data record item is adding, FLAG is set to be invalid, i.e. an operation of performing adding firstly and then deleting for the same LUID, the data record item in the changelog corresponding to this data record item is invalid.
(2) the synchronization process of the data record items in the changelog is completed.

Figure 12 is a schematic diagram of record items in the changelog before ADD operation according to the embodiments in the present invention. As shown in Figure 12, the operation type corresponding to the record item of which LUID is 1 is ADD, the operation type corresponding to the record item of which LUID is 2 is DELETE, the operation type corresponding to the record item of which LUID is 3 is UPDATE, the operation type corresponding to the record item of which LUID is 4 is DELETE, and the FLAG identifiers of the above record items are 1.

Figure 13 is a schematic diagram of record items in the changelog after ADD operation according to the embodiments in the present invention. As shown in Figure 13, a record item with the operation type of ADD is newly added to the changelog file, i.e. adding "5 ADD"; moreover, as it is a newly added record item, this record is valid and its corresponding FLAG identifier is 1.

Figure 14 is a schematic diagram of record items in the changelog after DELETE operation according to the embodiments in the present invention. As shown in Figure 14, after the record item of which LUID is 5 is added, the DELETE operation is also performed for this record between two times of synchronization, thus, this record item is invalid, and its corresponding FLAG identifier is 0. Moreover, in this embodiment, when a certain data record is successfully synchronized, the changelog record corresponding to this data record item is invalid, and its corresponding FLAG identifier is set to be 0.

With this embodiment, when a changelog record item is invalid, updating the changelog record is not to delete this record but to set the FLAG of this data record item to be invalid. Therefore, the complex problem of locating and reusing the spare memory space can be solved according to the FLAG identifiers in the changelog file. The specific process of realizing the same can be accomplished in the following manner:
with the flag code (i.e. FLAG identifier) set in the above data record items and used for identifying whether the data record items are valid or not, after the second data record item is set according to the first data record item, the data record item identified by the flag code to be valid is stored as a new changelog; the new changelog is used to replace the changelog; for instance, all valid changelog records are stored in one temporary file according to the FLAG identifiers; the original changelog file is deleted; and the temporary file is renamed as the name of the original changelog file.

From the above processes, it can be seen that a flag code FLAG used for identifying whether the data record item is valid or not is set, and a completely new changelog file is obtained according to the FLAGE identifier status in the changelog file, thus, the cyclic operations for this changelog file makes it quite easy to maintain the file.

Preferably, all the data record items that complete the data synchronization in the changelog can be deleted; for instance, in a situation that the changelog is set at the mobile terminal side, the mobile terminal deletes all data record items in the changelog after the data synchronization is completed at the mobile terminal and network sides through the changelog. With this preferred embodiment, all the data record items for which the data synchronization has been performed are deleted, thus, the memory space occupied can be reduced.

Owing to the above mentioned, in the embodiments in the present invention:
1. in the precondition of not adding new changelog data record item, only the information modified in the last time is stored with the overlapping method, therefore, the size of the changelog file can be reduced, and the memory space of the file is saved;
2. if the operation corresponding to the data record item required to be added causes the existing data record item to be invalid or after the synchronization of the data record itemis successfully compeleted, the corresponding data record item in the changelog is deleted, therefore, the memory space can be saved; and
3. a flag code used for identifying whether the data record item is valid or not is added to the data record items in the changelog, and a completely new changelog file is obtained according to the FLAG identifier status in the changelog file, thus, the cyclic operations for this changelog file makes the complex process of locating and reusing the spare memory space become quite easy, which makes it convenient to maintain the changelog file.

Apparently, the person skilled in the art should know that each module or step in the present invention can be realized by the general calculating apparatus. They can be collected in a single calculating apparatus or distributed in the network formed by a plurality of calculating apparatus. Optionally, they can be realized by the program codes executable by the calculating apparatus, therefore, they can be stored in the storing apparatus to be executed by the calculating apparatus, or they can be fabricated into integrated circuit modules, respectively, or a plurality of modules or steps therein are fabricated into individual integrated circuit module for the accomplishment. Thus, the present invention is not limited to the combination of any particular hardware and software.

## Claims

1. A method for maintaining a changelog in data synchronization, the changelog being configured to record an operation executed for an object and being composed of data record items, the data record item including flag information configured to uniquely identify the object and an operation type corresponding to the flag information, the operation type including adding, updating and deleting, the method **characterized by** the method including:
reading, between two times of the data synchronization, the flag information of a first data record item which is required to be added to the changelog; and
searching for whether there is a second data record item including the flag information in the changelog, and in a situation that there is the second data record item, setting the second data record item according to the first data record item, so as to only store changed information in the last time; **characterized in that**
the data record item is further configured to include a flag code to identify whether the data record item is valid or not; and **in that**
after the second data record item is set according to the first data record item, storing the data record item identified by the flag code to be valid as a new changelog; and replacing the changelog with the new changelog.

2. The method according to Claim 1, **characterized in that** the step of setting the second data record item according to the first data record item includes:
in a situation that an operation corresponding to the first data record item is deleting, if the operation type included by the second data record item is adding, deleting the second data record item, and if the operation type included by the second data record item is updating, setting the operation type of the second data record item to be deleting; and
in a situation that the operation corresponding to the first data record item is updating, the operation type included by the second data record item remaining unchanged.

3. The method according to Claim 1, **characterized in that** in a situation that there is no second data record item, the first data record item is added to the changelog, and an operation type is set according to an operation corresponding to the first data record item.

4. The method according to Claim 1, **characterized in that** the flag code identifies invalid according to at least either of following two situations:
the operation corresponding to the first data record item causes the second data record item to be invalid; and
a synchronization process of the data record items in the changelog is completed.

5. The method according to Claim 4, **characterized in that** the situation of the operation corresponding to the first data record item causing the second data record item to be invalid includes:
the operation corresponding to the first data record item being deleting, and the operation type included by the second data record item being adding.

6. The method according to any one of Claims 1-5, **characterized in that** the changelog is set at a mobile terminal side or a network side.

7. The method according to Claim 6, **characterized in that** in a situation that the changelog is set at the mobile terminal side, the method further includes:
after the mobile terminal and the network side complete the data synchronization by means of the changelog, the mobile terminal deleting all data record items in the changelog.

8. A device for maintaining a changelog in data synchronization, the changelog being configured to record an operation executed for an object and being composed of data record items, the data record item including flag information configured to uniquely identify the object and an operation type corresponding to the flag information, the operation type including adding, updating and deleting, the device **characterized by** comprising:
a reading module, configured to, for a first data record item which is required to be added to the changelog, read flag information of the first data record item between two times of the data synchronization;
a searching module, configured to search for whether there is a second data record item including the flag information in the changelog; and
a setting module, configured to set the second data record item according to the first data record item in a situation that a searching result by the searching module is that there is the second data record item, so as to only store changed information in the last time; **characterized in that**
the data record item is configured to includes a flag code to identify whether the data record item is valid or not; and **in that**
the device is further configured to, after the second data record item is set according to the first data record item, store the data record item identified by the flag code to be valid as a new changelog; and replace the changelog with the new changelog.

9. The device according to Claim 8, **characterized in that** the device further comprises
a deleting module, configured to delete all data record items for which the data synchronization has been performed in the changelog.

## Patentansprüche

1. Ein Verfahren zum Führen eines Veränderungs-Logs bei der Datensynchronisation, wobei der Veränderungs-Log konfiguriert ist, eine Operation aufzuzeichnen, die für ein Objekt durchgeführt wird und zusammengesetzt ist aus Datensatz-Elementen, wobei das Datensatz-Element einschließt Flag-Informationen, die konfiguriert sind, um das Objekt und einen Operationstyp, der der Flag-Information entspricht, eindeutig zu identifizieren, wobei der Operationstyp einschließt Addieren, Updaten und Löschen, wobei das Verfahren **gekennzeichnet ist dadurch**, dass das Verfahren einschließt:
Lesen, zwischen zwei Zeiten von Datensynchronisation, der Flag-Informationen eines ersten Datensatz-Elements, für welches gefordert wird, dass es dem Veränderungs-Log hinzugefügt wird; und
Suchen, ob es ein zweites Datensatz-Element in dem Veränderungs-Log gibt, das die Flag-Informationen einschließt, und für den Fall, dass es das zweite Datensatz-Element gibt, setzen des zweiten Datensatz-Elements in Übereinstimmung mit dem ersten Datensatz-Element, sodass nur geänderte Informationen, die in der letzten Zeit geändert wurden, gespeichert werden, **dadurch** gekennzeichnet, dass
das Datensatz-Element ferner konfiguriert ist, einen Flag-Code einzuschließen, um zu identifizieren, ob das Datensatz-Element valide ist oder nicht, und **dadurch**, dass
nachdem das zweite Datensatz-Element in Übereinstimmung mit dem ersten Datensatz-Element gesetzt wurde, das Datensatz-Element, das **durch** den Flag-Code als valide identifiziert wurde, als ein neuer Veränderungs-Log gesetzt wird, und Ersetzen des Veränderungs-Logs mit dem neuen Veränderungs-Log.

2. Das Verfahren nach Anspruch 1, **dadurch gekennzeichnet, dass** das Setzen des zweiten Datensatz-Elements in Übereinstimmung mit dem ersten Datensatz-Element einschließt:
in einem Fall, dass eine Operation, die dem ersten Datensatz-Element entspricht, löschen ist, falls der Operationstyp, der durch das zweite Datensatz-Element eingeschlossen wird, addieren ist, Löschen des zweiten Datensatz-Elements, und falls der Operationstyp, der in dem zweiten Datensatz-Element enthalten ist, updaten ist, setzen des Operationstyps des zweiten Datensatz-Elements auf Löschen; und
im Fall, dass die Operation, die dem ersten Datensatz-Element entspricht, updaten ist, unverändert lassen des Operationstyps, der in dem zweiten Datensatz-Element enthalten ist.

3. Das Verfahren nach Anspruch 1, **dadurch gekennzeichnet, dass** in einer Situation, wo es kein zweites Datensatz-Element gibt, das erste Datensatz-Element zu dem Veränderungs-Log hinzugefügt wird, und ein Operationstyp gesetzt wird in Übereinstimmung mit einer Operation, die dem ersten Datensatz-Element entspricht.

4. Das Verfahren nach Anspruch 1, **dadurch gekennzeichnet, dass** der Flag-Code ungültig in Übereinstimmung mit zumindest einer der folgenden zwei Situationen identifiziert wird.
Die Operation entsprechend dem ersten Datensatz-Element veranlasst das zweite Datensatz-Element invalide zu sein; und
ein Synchronisationsprozess der Datensatz-Elemente in dem Veränderungs-Log ist vollständig ausgeführt.

5. Das Verfahren nach Anspruch 4, **dadurch gekennzeichnet, dass** die Situation, dass die Operation, die dem ersten Datensatz-Element entspricht, das zweite Datensatz-Element veranlasst, invalide zu sein, einschließt:
die Operation entsprechend dem ersten Datensatz-Element ist Löschen und der Operationstyp, der in dem zweiten Datensatz-Element enthalten ist, ist Addieren.

6. Das Verfahren nach einem der Ansprüche 1 bis 5, **dadurch gekennzeichnet, dass** der Veränderungs-Log auf Seiten eines mobilen Terminals oder auf einer Netzwerkseite gesetzt wird.

7. Das Verfahren nach Anspruch 6, **dadurch gekennzeichnet, dass** in einer Situation, wobei der Veränderungs-Log auf Seiten eines mobilen Terminals gesetzt wird, das Verfahren ferner einschließt:
nachdem das mobile Terminal und die Netzwerkseite die Datensynchronisation mittels des Veränderungs-Log vervollständigt haben, Löschen aller Datensatz-Elemente in dem Veränderungs-Log durch das mobile Terminal.

8. Eine Vorrichtung zum Führen eines Veränderungs-Logs bei der Datensynchronisation, wobei der Veränderungs-Log konfiguriert ist, eine Operation aufzuzeichnen, die für ein Objekt durchgeführt wird und zusammengesetzt ist aus Datensatz-Elementen, wobei ein Datensatz-Element Flag-Informationen einschließt, die konfiguriert sind, um eindeutig das Objekt und einen Operationstyp, der den Flag-Informationen entspricht, zu identifizieren, wobei der Operationstyp einschließt Addieren, Updaten und Löschen, wobei die Vorrichtung **gekennzeichnet ist dadurch**, dass sie aufweist:
ein Lesemodul, das konfiguriert ist, um für ein erstes Datensatz-Element, für das gefordert wirt, dass es zum Veränderungs-Log hinzugefügt wird, Flag-Informationen des ersten Datensatz-Elements zwischen zwei Zeiten der Datensynchronisation zu lesen;
ein Suchmodul, das konfiguriert ist, um zu suchen, ob es ein zweites Datensatz-Element einschließend die Flag-Informationen in dem Veränderungs-Log gibt; und
ein Setzmodul, das konfiguriert ist, das zweite Datensatz-Element in Übereinstimmung mit dem ersten Datensatz-Element zu setzen in einer Situation, bei der ein Suchergebnis **durch** das Suchmodul so ist, dass es das zweite Datensatz-Element gibt, sodass nur veränderte Informationen in der letzten Zeit gespeichert werden, **dadurch** gekennzeichnet, dass
das Datensatz-Element konfiguriert ist, einen Flag-Code einzuschließen, um zu identifizieren, ob das Datensatz-Element valide ist oder nicht, und **dadurch**, dass
die Vorrichtung ferner konfiguriert ist, um nachdem das zweite Datensatz-Element in Übereinstimmung mit dem ersten Datensatz-Element gesetzt wurde, das **durch** den Flag-Code als valide identifizierte Datensatz-Element als einen neuen Veränderungs-Log zu speichern und Ersetzen des Veränderungs-Logs mit dem neuen Veränderungs-Log.

9. Die Vorrichtung nach Anspruch 8, **dadurch gekennzeichnet, dass** die Vorrichtung ferner aufweist:
ein Löschmodul, das konfiguriert ist, alle Datensatz-Elemente, für die die Datensynchronisation durchgeführt wurde, in dem Veränderungs-Log zu löschen.

## Revendications

1. Procédé pour maintenir un journal des modifications en synchronisation de données, le journal des modifications étant configuré pour enregistrer une opération exécutée pour un objet et étant composé d'articles d'enregistrement de données, l'article d'enregistrement de données comprenant des informations d'indicateur configurées pour identifier de manière unique l'objet et un type d'opération correspondant aux informations d'indicateur, le type d'opération comprenant un ajout, une mise à jour et un effacement, le procédé étant **caractérisé en ce qu'**il comprend les étapes:
lire, entre deux instants de la synchronisation de données, les informations d'indicateur d'un premier article d'enregistrement de données qui doit nécessairement être ajouté au journal des modifications ; et
rechercher s'il existe un deuxième article d'enregistrement de données comprenant les informations d'indicateur dans le journal des modifications, et, dans une situation dans laquelle le deuxième article d'enregistrement de données existe, initier le deuxième article d'enregistrement de données conformément au premier article d'enregistrement de données, de manière à ne mémoriser que des informations modifiées la dernière fois ; **caractérisé en ce que**
l'article d'enregistrement de données est en outre configuré pour comprendre un code d'indicateur pour identifier si l'article d'enregistrement de données est valide ou non ; et **en ce que**
après que le deuxième article d'enregistrement de données a été initialisé conformément au premier article d'enregistrement de données, l'article d'enregistrement de données identifié par le code d'indicateur comme étant valide est mémorisé en tant que nouveau journal des modifications ; et le journal des modifications est remplacé par le nouveau journal des modifications.

2. Procédé selon la revendication 1, **caractérisé en ce que** l'étape d'initialisation du deuxième article d'enregistrement de données conformément au premier article d'enregistrement de données comprend :
dans une situation dans laquelle une opération correspondant au premier article d'enregistrement de données est un effacement, si le type d'opération inclus par le deuxième article d'enregistrement de données est un ajout, l'effacement du deuxième article d'enregistrement de données, et, si le type d'opération inclus par le deuxième article d'enregistrement de données est une mise à jour, l'initialisation du type d'opération du deuxième article d'enregistrement de données pour qu'il soit un effacement ; et
dans une situation dans laquelle l'opération correspondant au premier article d'enregistrement de données est une mise à jour, le type d'opération inclus par le deuxième article d'enregistrement de données reste inchangé.

3. Procédé selon la revendication 1, **caractérisé en ce que**, dans une situation dans laquelle il n'y a pas de deuxième article d'enregistrement de données, le premier article d'enregistrement de données est ajouté au journal des modifications, et un type d'opération est initialisé conformément à une opération correspondant au premier article d'enregistrement de données.

4. Procédé selon la revendication 1, **caractérisé en ce que** le code d'indicateur indique non valide en fonction d'au moins l'une ou l'autre des deux situations suivantes :
l'opération correspondant au premier article d'enregistrement de données rend le deuxième article d'enregistrement de données non valide ; et
un processus de synchronisation des articles d'enregistrement de données dans le journal des modifications est achevé.

5. Procédé selon la revendication 4, **caractérisé en ce que** la situation de l'opération correspondant au premier article d'enregistrement de données qui rend le deuxième article d'enregistrement de données non valide comprend :
l'opération correspondant au premier article d'enregistrement de données est un effacement, et le type d'opération inclus par le deuxième article d'enregistrement de données est un ajout.

6. Procédé selon l'une quelconque des revendications 1 à 5, **caractérisé en ce que** le journal des modifications est initialisé du côté du terminal mobile ou du côté du réseau.

7. Procédé selon la revendication 6, **caractérisé en ce que**, dans une situation dans laquelle le journal des modifications est initialisé du côté du terminal mobile, le procédé comporte en outre:
après que le terminal mobile et le côté de réseau ont achevé la synchronisation de données au moyen du journal des modifications, le terminal mobile efface tous les articles d'enregistrement de données dans le journal des modifications.

8. Dispositif pour maintenir un journal des modifications en synchronisation de données, le journal des modifications étant configuré pour enregistrer une opération exécutée pour un objet et étant composé d'articles d'enregistrement de données, l'article d'enregistrement de données comprenant des informations d'indicateur configurées pour identifier de manière unique l'objet et un type d'opération correspondant aux informations d'indicateur, le type d'opération comprenant un ajout, une mise à jour et un effacement, le dispositif étant **caractérisé en ce qu'**il comprend :
un module de lecture, configuré, pour un premier article d'enregistrement de données qui doit nécessairement être ajouté au journal des modifications, pour lire les informations d'indicateur du premier article d'enregistrement de données entre deux instants de la synchronisation de données ;
un module de recherche, configuré pour rechercher s'il existe un deuxième article d'enregistrement de données comprenant les informations d'indicateur dans le journal des modifications ; et
un module d'initialisation, configuré pour initialiser le deuxième article d'enregistrement de données conformément au premier article d'enregistrement de données dans une situation dans laquelle un résultat de recherche du module de recherche est qu'il existe le deuxième article d'enregistrement de données, de manière à ne mémoriser que des informations modifiées la dernière fois ; **caractérisé en ce que**
l'article d'enregistrement de données est configuré pour comprendre un code d'indicateur pour identifier si l'article d'enregistrement de données est valide ou non ; et **en ce que**
le dispositif est en outre configuré pour, après que le deuxième article d'enregistrement de données a été initialisé conformément au premier article d'enregistrement de données, mémoriser l'article d'enregistrement de données identifié par le code d'indicateur comme étant valide en tant que nouveau journal des modifications ; et remplacer le journal des modifications par le nouveau journal des modifications.

9. Dispositif selon la revendication 8, **caractérisé en ce que** le dispositif comprend en outre :
un module d'effacement, configuré pour effacer tous les articles d'enregistrement de données pour lesquels la synchronisation de données a été effectuée dans le journal des modifications.
